# EUROPÄISCHE PATENTSCHRIFT

(11) **EP 3 487 657 B1**
(45) Veröffentlichungstag und Bekanntmachung des Hinweises auf die Patenterteilung: **23.07.2025**
(21) Anmeldenummer: 17745703.3
(22) Anmeldetag: 24.07.2017
(51) Int. Cl.: B23K 26/08, B23K 26/38

(54) **VERFAHREN ZUM ERZEUGEN VON SCHRÄGEN VORSPRÜNGEN ODER AUSSPARUNGEN AN EINER SCHNITTFLANKE EINES PLATTENFÖRMIGEN WERKSTÜCKS UND ZUGEHÖRIGES COMPUTERPROGRAMMPRODUKT**
METHOD FOR GENERATING TRANSVERSE PROTRUSTIONS OR RECESSES ON A CUT EDGE OF A PLATE-SHAPED WORKPIECE AND ASSOCIATED COMPUTER PROGRAM PRODUCT
PROCÉDÉ POUR PRODUIRE DES SAILLIES OU DES ÉVIDEMENTS EN BIAIS AU NIVEAU D'UN BORD DE COUPE D'UNE PIÈCE EN FORME DE PLAQUE ET PRODUIT PROGRAMME INFORMATIQUE ASSOCIÉ

(30) Priorität: 25.07.2016 DE 102016213540
(43) Veröffentlichungstag der Anmeldung: 29.05.2019
(73) Patentinhaber: TRUMPF Werkzeugmaschinen SE + Co. KG, 71254 Ditzingen (DE)
(72) Erfinder: KAISER, Tobias, 71277 Rutesheim (DE); KNOTTEK, Michael, 83368 Sankt Georgen (DE)
(74) Vertreter: Trumpf Patentabteilung
(86) Internationale Anmeldenummer: PCT/EP2017/068570
(87) Internationale Veröffentlichungsnummer: WO 2018/019746

(56) Entgegenhaltungen:
- CN-A- 104 096 974
- DE-A1- 2 926 791
- DE-U1- 8 701 354
- US-A- 5 043 553
- US-A1- 2011 183 271

## Beschreibung

Die Erfindung betrifft ein Verfahren zum Erzeugen einer Aussparung oder eines Vorsprungs an einer Schnittflanke eines plattenförmigen Werkstücks, insbesondere eines Blechs, beim Schneiden der Schnittflanke mittels eines Laserstrahls, welcher aus einem Laserbearbeitungskopf austritt, der zum Schneiden der Schnittflanke in mindestens einer Richtung über dem Werkstück verfahrbar ist, sowie ein zugehöriges Computerprogrammprodukt.

Aus JP 2001246486 A, die die Grundlage für den Oberbegriff von Anspruch 1 bildet, ist es bekannt, zur Schweißkantenvorbereitung für das Schweißen von Stumpfstößen die Werkstückschmalseiten mit regelmäßig angeordneten Vorsprüngen zu versehen, die über die gesamte Werkstückdicke die gleiche Form aufweisen und daher auf der Ober- und Unterseite des Werkstücks gleich weit vorstehen.

Weiterhin sind auch aus der US 4,883,937 Blechkanten mit regelmäßigen, mechanisch eingebrachten Ausnehmungen bekannt.

Schließlich offenbart die JP 2009-241083 A ein Verfahren zum Erzeugen von Schrägschnitten mit Microjoints, wobei diese Strukturen in mehreren aufeinander folgenden Schritten (Schneidprozessen) erzeugt werden.

Ganz allgemein sind ferner Verfahren zum Schrägschneiden mittels Brennscheidmaschinen bekannt. So wird beispielsweise in der DE 29 26 791 A1 ein Verfahren zum Erzeugen eines Schrägschnittes mittels eines Brenneraggregats an einer Führungsmaschine beschrieben.

Der vorliegenden Erfindung liegt demgegenüber die Aufgabe zugrunde, ein Verfahren zum Erzeugen lokaler Modifikationen in Form einer Aussparung oder eines Vorsprungs an einer Schnittflanke eines plattenförmigen Werkstücks beim Laserschneiden der Schnittflanke anzugeben, bei dem die Aussparung bzw. der Vorsprung in einem Schnitt, also ohne den Laserstrahl ausschalten zu müssen, geschnitten werden können.

Diese Aufgabe wird erfindungsgemäß gelöst durch ein Verfahren zum Erzeugen lokaler Modifikationen in Form einer Aussparung oder eines Vorsprungs an einer Schnittflanke eines plattenförmigen Werkstücks, insbesondere eines Blechs, beim Schneiden der Schnittflanke mittels eines Laserstrahls, welcher aus einem Laserbearbeitungskopf austritt, der zum Schneiden der Schnittflanke in mindestens einer Richtung über dem Werkstück verfahrbar ist und dessen Längsachse gegenüber der Oberflächennormalen des Werkstücks bzw. der Senkrechten in mindestens einer Richtung, vorzugsweise in zwei Richtungen, schräg stellbar ist, wobei beim Schneiden der Aussparung oder des Vorsprungs der Laserbearbeitungskopf derart schräg gestellt und verfahren wird, dass der Laserstrahl auf den beiden, laserzugewandten und laserabgewandten Werkstückseiten unterschiedlich lange Konturen abfährt, um dadurch gegenüber der eigentlichen Schnittflanke eine schräge Aussparung oder einen schrägen Vorsprung zu erzeugen. Die Drehachsen für die Schwenkbewegung des Laserbearbeitungskopfes können dabei sowohl innerhalb als auch außerhalb des Laserbearbeitungskopfes angeordnet sein. Im ersten Fall wandert der Auftreffpunkt des Laserstrahls auf der Werkstückoberfläche während der Schwenkbewegung des Laserbearbeitungskopfes. Im zweiten Fall wird der Laserbearbeitungskopf um einen (Fix-)Punkt im Raum gedreht, der auf der Laserstrahlachse liegt. Dieser Punkt kann sowohl innerhalb als auch außerhalb des Werkstücks gewählt sein.

Erfindungsgemäß können beim Laserschneiden von senkrechten oder schrägen Schnittflanken in nur einem Laserschnitt auch Aussparungen oder Vorsprünge in die geschnittene Schnittflanke integriert werden. So können auf einfache Weise und variabel verschiedene Arten von lokalen Modifikationen in die Schnittflanken von Werkstücken eingebracht werden. Diese Aussparungen oder Vorsprünge können bei der weiteren Verarbeitung des Werkstücks spezifische Funktionen erfüllen, beispielsweise als Abstandshalter beim Verschweißen zweier Werkstücke oder als Positionierhilfen für das Verbinden von Bauteilen dienen oder Freischnitte für anschließend entstehende Biegewülste sein.

Zum Erzeugen der erfindungsgemäßen Aussparungen oder Vorsprünge wird während des Schneidens die Schrägstellung des Laserbearbeitungskopfes, insbesondere in einer Ebene rechtwinklig zur Schnittflanke bzw. rechtwinklig zur Schnittrichtung, geändert, um dadurch einen, insbesondere rechtwinklig zur Schnittflanke verlaufenden, Schnitt auszuführen, der auf den beiden Werkstückseiten unterschiedlich lang ist. Dazu wird zumindest der Winkel, um den der Laserbearbeitungskopf gegenüber der Schnittflanke in der zur Schnittflanke rechtwinkligen Richtung schräg gestellt (verkippt) ist, während des Schneidens der Aussparung bzw. des Vorsprungs geändert.

Erfindungsgemäß wird während des Schneidens der schrägen Aussparung oder des schrägen Vorsprungs der Laserbearbeitungskopf derart schräg gestellt und verfahren, dass der Laserstrahl auf der einen, ersten Werkstückseite eine Aussparungs- bzw. Vorsprungskontur abfährt und dabei mit seiner Strahlachse stets die auf der anderen, zweiten Werkstückseite vorgesehene Kante der eigentlichen Schnittflanke schneidet, so dass die schräge Aussparung oder der schräge Vorsprung auf der zweiten Werkstückseite in die Kante der eigentlichen Schnittflanke mündet. Dadurch ist diese Kante der eigentlichen Schnittflanke durchgängig, also durch die Aussparung bzw. den Vorsprung nicht unterbrochen. Weiter erfindungsgemäß bleibt während des Schneidens der schrägen Aussparung oder des schrägen Vorsprungs die die Kante der eigentlichen Schnittflanke schneidende Strahlachse des Laserstrahls in einem Fixpunkt auf dieser Kante. Im Falle des Fixpunkts wird entlang der gesamten, vom Laserstrahl auf der ersten Werkstückseite abgefahrenen Aussparungs- bzw. Vorsprungskontur der Laserbearbeitungskopf vorzugsweise mit konstanter Geschwindigkeit um den Fixpunkt geschwenkt.

Es versteht sich, dass zum Erzeugen der erfindungsgemäßen Aussparungen oder Vorsprünge der Laserbearbeitungskopf ferner bereits während des Schneidens der eigentlichen Schnittflanke in Schnittrichtung, d.h. parallel zur eigentlichen Schnittflanke, geschwenkt wird, so dass beim Schneidbeginn des Vorsprungs oder der Aussparung der in Schnittrichtung gewünschte Winkel des Laserbearbeitungskopfs bereits eingestellt ist. Ebenso kann die Rückstellung des Laserbearbeitungskopfs in Schnittrichtung erst nach dem Schneiden des Vorsprungs bzw. der Aussparung während des Weiterschneidens der eigentlichen Schnittflanke erfolgen. Auf diese Weise wird ein kontinuierlicher Übergang zwischen dem Schneiden der Schnittflanke und der Aussparung bzw. des Vorsprungs erreicht, so dass die Schneidgeschwindigkeit nicht zu stark reduziert werden muss.

Bevorzugt wird die Schneidgeschwindigkeit beim Schneiden der schrägen Aussparung oder des schrägen Vorsprungs gegenüber der Schneidgeschwindigkeit beim Schneiden der Schnittflanke reduziert oder erhöht, und zwar um das Maß, um welches die effektive Blechdicke für den schräggestellten Laserstrahl steigt bzw. abnimmt. Vorteilhaft hat die Laserleistung beim Schneiden des schrägen Vorsprungs oder der schrägen Aussparung den gleichen Wert wie beim Schneiden der eigentlichen Schnittflanke.

Alternativ kann auch bereits die eigentliche Schnittflanke mit einem senkrecht zur Schnittflanke schräggestellten Laserstrahl geschnitten werden, dessen Schrägstellung dann zum Schneiden der Aussparung oder des Vorsprungs geändert wird, um an der schrägen Schnittflanke eine (ggf. weniger) schräge Aussparung oder einen (ggf. weniger) schrägen Vorsprung zu erzeugen. Entsprechend einer eventuell geringeren Schrägstellung des Bearbeitungskopfes gegenüber der Flächennormale des Werkstücks kann dann die Schneidgeschwindigkeit beim Schneiden der Aussparung bzw. des Vorsprungs auch höher sein als beim Schneiden der eigentlichen Schnittflanke.

Damit sich der effektive Abstand, der von dem aus dem Laserbearbeitungskopf ausgetretenen Laserstrahl bis zum Werkstück zurückgelegt wird, auch bei schräggestelltem Laserbearbeitungskopf nicht ändert, wird beim Schneiden der schrägen Aussparung oder des schrägen Vorsprungs der Abstand zwischen dem Laserbearbeitungskopf und der Werkstückoberfläche, insbesondere der Abstand zwischen einer Schneidgasdüse des Laserbearbeitungskopfes und der Werkstückoberfläche, entsprechend reduziert, wenn sich die Schrägstellung des Laserbearbeitungskopfes gegenüber der Flächennormalen des Werkstücks erhöht.

Beim Schneiden der schrägen Aussparung oder des schrägen Vorsprungs kann bei größerer Neigung des Bearbeitungskopfes aufgrund der dann größeren effektiven Werkstückdicke der Druck eines aus einer Schneidgasdüse des Laserbearbeitungskopfs austretenden Schneidgases entsprechend erhöht werden.

Die Erfindung betrifft auch ein Computerprogrammprodukt, welches Codemittel aufweist, die zum Durchführen aller Schritte des erfindungsgemäßen Verfahrens angepasst sind, wenn das Programm auf einer Steuerung einer Laserbearbeitungsmaschine abläuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen verfahrbaren und schräg stellbaren Laserbearbeitungskopf zum Laserschneiden von Werkstücken;
- Fign. 2a-2d: die einzelnen Schritte (Fign. 2a-2c) einer ersten Verfahrensvariante zum Erzeugen einer schrägen Aussparung oder eines schrägen Vorsprungs an einer Schnittflanke eines plattenförmigen Werkstücks (Fig. 2d) (nicht Gegenstand der vorliegenden Ansprüche);
- Fign. 3a, 3b: einen gegenüber Fig. 2c modifizierten Verfahrensschritt zum Erzeugen einer modifizierten schrägen Aussparung oder eines modifizierten schrägen Vorsprungs an der Schnittflanke des plattenförmigen Werkstücks (Fig. 3b);
- Fign. 4a-4d: die einzelnen Schritte (Fign. 4a-4c) einer zweiten Verfahrensvariante zum Erzeugen einer schrägen Aussparung oder eines schrägen Vorsprungs an einer Schnittflanke eines plattenförmigen Werkstücks (Fig. 4d) (nicht Gegenstand der vorliegenden Ansprüche);
- Fign. 5a, 5b: einen gegenüber Fig. 4c modifizierten Verfahrensschritt zum Erzeugen einer modifizierten schrägen Aussparung oder eines modifizierten schrägen Vorsprungs an der Schnittflanke des plattenförmigen Werkstücks (Fig. 5b) (nicht Gegenstand der vorliegenden Ansprüche);
- Fig. 6: ein plattenförmiges Werkstück mit einem schrägen Vorsprung auf der Werkstückoberseite und mit einer schrägen Aussparung auf der Werkstückunterseite (nicht Gegenstand der vorliegenden Ansprüche); und
- Fign. 7a, 7b: eine Schneidgasdüse des Laserbearbeitungskopfs bei schräggestelltem und nicht schräggestelltem Laserbearbeitungskopf.

In der folgenden Beschreibung der Zeichnung werden für gleiche bzw. funktionsgleiche Bauteile identische Bezugszeichen verwendet.

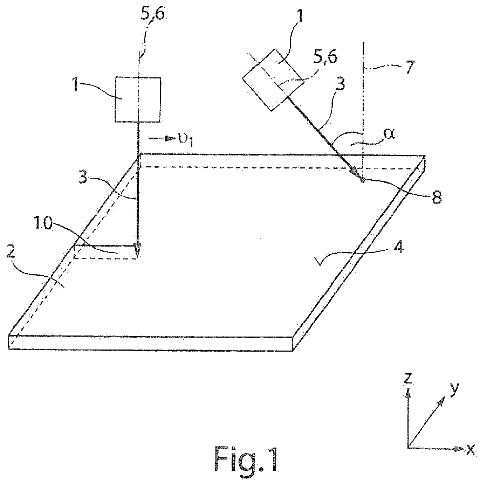

Der in **Fig. 1** gezeigte Laserbearbeitungskopf **1** dient zum Laserschneiden von plattenförmigen Werkstücken **2**, wie z.B. von Blechen, mittels eines aus dem Laserbearbeitungskopf 1 austretenden Laserstrahls **3.** Der Laserstrahl 3 wird in einer Laserstrahlquelle (nicht gezeigt) erzeugt und, beispielsweise mittels einer Lichtleitfaser, an den Laserbearbeitungskopf 1 weitergeleitet.

Der Laserbearbeitungskopf 1 ist parallel zur ebenen Werkstückoberfläche **4** zweidimensional in X- und Y- Richtungen verfahrbar. Außerdem ist der Laserbearbeitungskopf 1 mit seiner Längsachse **5** bzw. mit der Strahlachse **6** des austretenden Laserstrahls 3 gegenüber der Oberflächennormalen **7** des Werkstücks 2 bzw. gegenüber der Senkrechten in X- und Y-Richtung um einen Winkel α bzw. β schräg stellbar und um einen Punkt **8** im Raum drehbar. Der Laserbearbeitungskopf 1 wird in der X- und/oder Y-Richtung entlang der gewünschten Schnittrichtung mit einer Schneidgeschwindigkeit **v1** verfahren, um im Werkstück 2 eine Schnittflanke **10** zu schneiden.

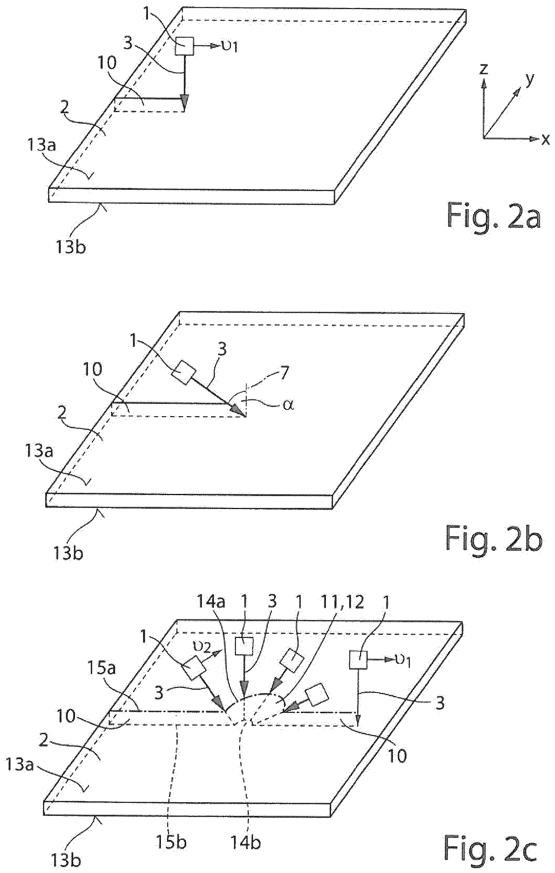

Mit Bezug auf die **Fign. 2a bis 2d** wird im Folgenden ein erstes Verfahren zum Erzeugen einer schrägen Aussparung **11** oder eines schrägen Vorsprungs **12** an der Schnittflanke 10 des Werkstücks 2 beim Schneiden der Schnittflanke 10 mittels des Laserstrahls 3 beschrieben. Das Verfahren gemäß den Figuren 2a bis 2d ist nicht Gegenstand der vorliegend beanspruchten Erfindung.

Fig. 2a zeigt das Laserschneiden der Schnittflanke 10 mittels des z.B. rechtwinklig auf das Werkstück 2 treffenden Laserstrahls 3, indem der Laserbearbeitungskopf 1 über dem Werkstück 2 mit der Schneidgeschwindigkeit v1 in der Schnittrichtung (X-Richtung) verfahren wird.

In Fig. 2b wird der Laserstrahl 3 innerhalb der Ebene der Schnittflanke 10 (in X-Richtung) um den Winkel **α** schräggestellt, und zwar entweder bei sich noch in Schnittrichtung bewegendem Laserbearbeitungskopf 1 oder bei in Schnittrichtung stillstehendem Laserbearbeitungskopf 1. Diese Schrägstellung des Laserbearbeitungskopfes 1 wird während des nachfolgenden Laserschneidens der schrägen Aussparung 11 oder des schrägen Vorsprungs 12 beibehalten, könnte aber alternativ währenddessen auch geändert werden.

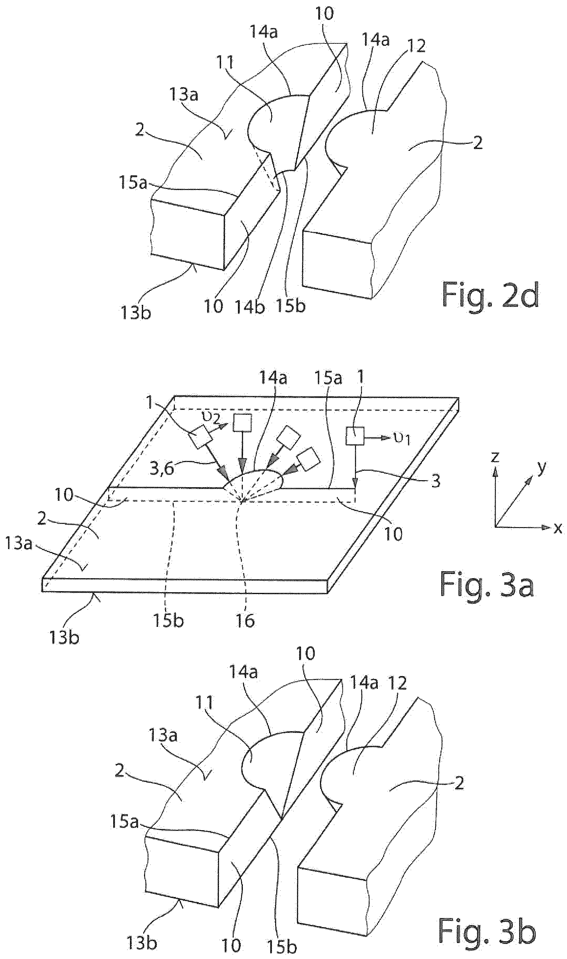

In Fig. 2c wird zum Laserschneiden der Aussparung 11 oder des Vorsprungs 12 der schräg gestellte Laserbearbeitungskopf 1 nun verfahren und dabei gleichzeitig senkrecht zur Ebene der Schnittflanke (in Y-Richtung) 10 mit sich änderndem Winkel β schräg gestellt, so dass der Laserstrahl 3 auf der laserzugewandten Werkstückoberseite **13a** und auf der laserabgewandten Werkstückunterseite **13b** unterschiedlich lange Konturen **14a, 14b** abfährt, um dadurch an der eigentlichen Schnittflanke 10 die in Fig. 2d gezeigte schräge Aussparung 11 oder den in Fig. 2d gezeigten schrägen Vorsprung 12 zu erzeugen. Der Laserbearbeitungskopf 1 wird also insgesamt um einen Punkt im Raum gedreht, der unterhalb des Werkstücks 2 liegt. Im gezeigten Ausführungsbeispiel ist dadurch die auf der Werkstückoberseite 13a abgefahrene Kontur ein Halbkreis mit größerem Radius und die auf der Werkstückunterseite 13b abgefahrene Kontur ein Halbkreis mit kleinerem Radius, so dass, wie in Fig. 2d gezeigt, eine kegelstumpfförmige Aussparung 11 bzw. ein kegelstumpfförmiger Vorsprung 12 an der eigentlichen Schnittflanke 10 erzeugt werden. Abschließend wird durch Zurückstellen des Laserbearbeitungskopfes 1 um den Winkel α in die in Fig. 2a gezeigte Ausgangslage der Laserstrahl 3 innerhalb der Ebene der Schnittflanke 10 wieder rechtwinklig zum Werkstück 2 gestellt und die Schnittflanke 10 mittels des Laserstrahls 3 weitergeschnitten, indem der Laserbearbeitungskopf 1 über dem Werkstück 2 mit der Schneidgeschwindigkeit v1 in der Schnittrichtung (X-Richtung) verfahren wird. Die Rückstellung des Laserbearbeitungskopfs 1 kann auch während des Weiterschneidens erfolgen. Wie in Fig. 2d gezeigt, ist keine der beiden ober- und unterseitigen Kanten **15a, 15b** der eigentlichen Schnittflanke 10 durchgängig, sondern durch die Aussparung 11 bzw. den Vorsprung 12 unterbrochen.

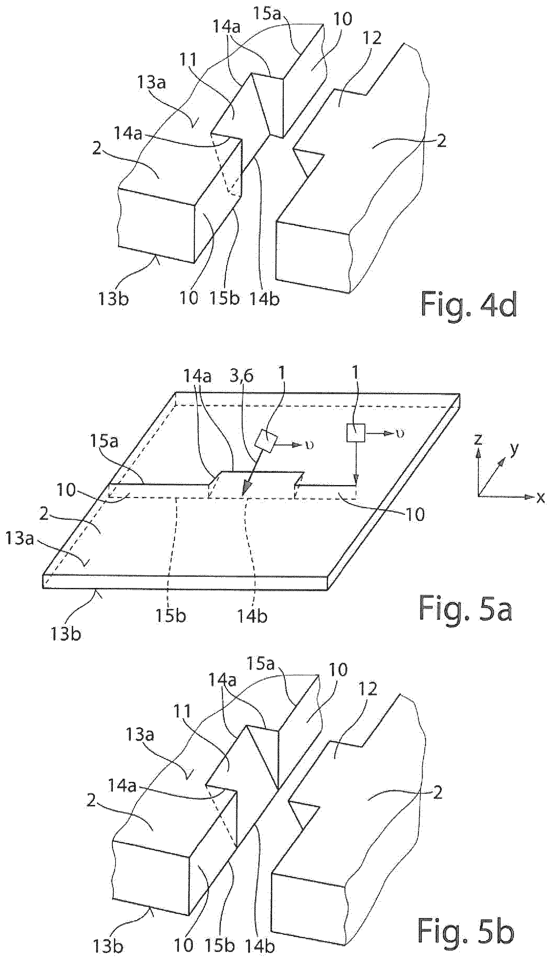

Die Figuren 3a und 3b zeigen ein erfindungsgemäßes Laserschneidverfahren. Im Unterschied zu Fig. 2c wird in **Fig. 3a** während des Laserschneidens der Aussparung 11 oder des Vorsprungs 12 der schräg gestellte Laserbearbeitungskopf 1 derart verfahren und dabei gleichzeitig geschwenkt, dass der Laserstrahl 3 auf der Werkstückoberseite 13a die gewünschte Aussparungs- bzw. Vorsprungskontur 14a abfährt und dabei mit seiner Strahlachse 6 stets die auf der Werkstückunterseite 13b vorgesehene Kante 15b der eigentlichen Schnittflanke 10 schneidet, so dass die lasergeschnittene Aussparung 11 oder der lasergeschnittene Vorsprung 12 auf der Werkstückunterseite 13b in diese Kante 15b der eigentlichen Schnittflanke 10 mündet (**Fig. 3b**). Im gezeigten Beispiel bleibt während des Laserschneidens der Aussparung 11 oder des Vorsprungs 12 die die Kante 15b der eigentlichen Schnittflanke 10 schneidende Strahlachse 6 des Laserstrahls 3 in einem Fixpunkt **16** auf dieser Kante 15b, wie in Fig. 3a gezeigt ist. Dabei wird entlang der gesamten, vom Laserstrahl 3 auf der ersten Werkstückseite 13a abgefahrenen Aussparungs- bzw. Vorsprungskontur 14a der Laserbearbeitungskopf 1 mit konstanter Geschwindigkeit **v2,** welche kleiner als die Schneidgeschwindigkeit v1 beim Laserschneiden der Schnittflanke 10 ist, um den Fixpunkt 16 geschwenkt. Alternativ könnte die Strahlachse 6 während des Laserschneidens der Aussparung 11 oder des Vorsprungs 12 aber auch auf dieser Kante 15b wandern, was zu einer Kontur führt, wie sie in Fig. 5b gezeigt ist (Die Alternative gemäß Fig. 5b ist nicht Gegenstand der vorliegenden Ansprüche).

Wie in Fig. 3b gezeigt, ist die unterseitige Kante 15b der eigentlichen Schnittflanke 10 nun durchgängig, also durch die Aussparung 11 bzw. den Vorsprung 12 nicht unterbrochen.

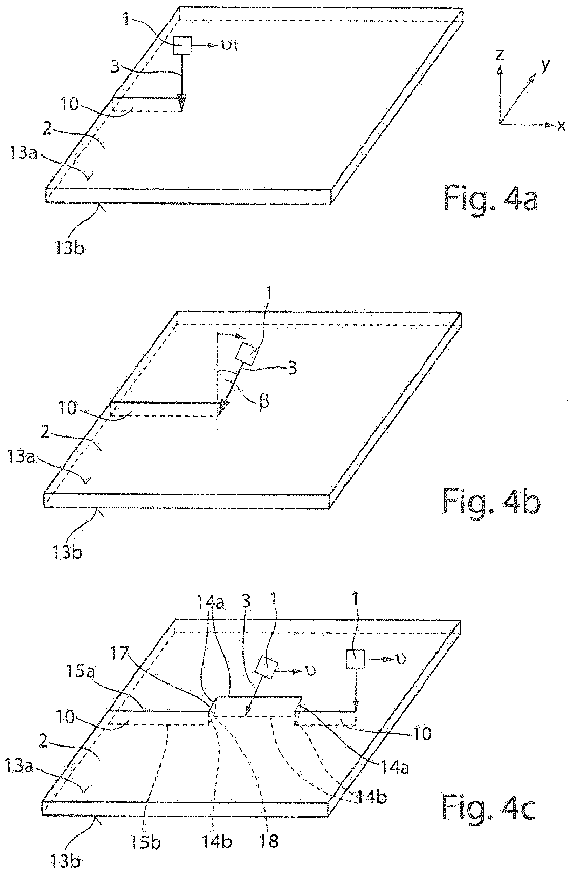

Mit Bezug auf die **Fign. 4a bis 4d** wird im Folgenden ein zweites Verfahren (das nicht unter den Umfang der vorliegenden Ansprüche fällt) zum Erzeugen einer schrägen Aussparung 11 oder eines schrägen Vorsprungs 12 an der Schnittflanke 10 des Werkstücks 2 beim Schneiden der Schnittflanke 10 mittels des Laserstrahls 3 beschrieben.

Fig. 4a zeigt das Laserschneiden der Schnittflanke 10 mittels des z.B. rechtwinklig auf das Werkstück 2 treffenden Laserstrahls 3, indem der Laserbearbeitungskopf 1 über dem Werkstück 2 mit der Schneidgeschwindigkeit v1 in der Schnittrichtung (X-Richtung) verfahren wird.

Bei in Schnittrichtung stillstehendem Laserbearbeitungskopf 1 wird in Fig. 4b der Laserbearbeitungskopf 1 in einer zur Schnittflanke 10 rechtwinkligen Ebene (in Y-Richtung) um den Winkel β schräggestellt, um dadurch einen zur Schnittflanke 10 rechtwinkligen Schnitt **17** auszuführen, der auf der Werkstückoberseite 13a länger als auf der Werkstückunterseite 13b ist. Dazu kann der Laserbearbeitungskopf 1 entweder während des Schneidens des Schnittes 17 mit zunehmendem Winkel schräg gestellt werden, bis beim Erreichen des Punkts **18** auf der Werkstückunterseite 13b die maximale Neigung des Laserbearbeitungskopfes 1 eingestellt ist. Alternativ kann der Laserbearbeitungskopf 1 zunächst in senkrechter Ausrichtung zur Werkstückoberfläche 13a bis zum Punkt 18 verfahren und anschließend um den Punkt 18 in der Y-Richtung geschwenkt werden, bis die endgültige Neigung erreicht ist.

In Fig. 4c wird der schräggestellte Laserbearbeitungskopf 1 mit einer Geschwindigkeit v2, welche kleiner als die Schneidgeschwindigkeit v1 beim Laserschneiden der Schnittflanke 10 ist, weiter in der Schnittrichtung (X-Richtung) verfahren, um dadurch einen zur eigentlichen Schnittflanke 10 parallelen Schnitt auszuführen, der auf den Werkstückober- und -unterseiten 13a, 13b gleich lang ist. Anschließend wird bei in Schnittrichtung stillstehendem Laserbearbeitungskopf 1 der Laserbearbeitungskopf 1 in einer zur Schnittflanke 10 rechtwinkligen Ebene um den Winkel β wieder zurück in seine in Fig. 4a gezeigte Ausgangslage geschwenkt, um dadurch einen zur Schnittflanke 10 rechtwinkligen Schnitt ausführen, der auf der Werkstückoberseite 13a länger als auf der Werkstückunterseite 13b ist. Die Schwenkbewegung des Laserbearbeitungskopfs 1 kann vor oder während der Verfahrbewegung in Y-Richtung erfolgen. Die vom Laserstrahl 3 auf der Werkstückoberseite 13a abgefahrene Aussparungs- bzw. Vorsprungskontur 14a ist somit kürzer als die auf der Werkstückunterseite 13b abgefahrene Aussparungs- bzw. Vorsprungskontur 14b. So wird an der eigentlichen Schnittflanke 10 die in Fig. 4d gezeigte schräge Aussparung 11 oder der in Fig. 2d gezeigte schräge Vorsprung 12 erzeugt. Abschließend wird die Schnittflanke 10 mittels des Laserstrahls 3 weitergeschnitten, indem der Laserbearbeitungskopf 1 über dem Werkstück 2 mit der Schneidgeschwindigkeit v1 in der Schnittrichtung verfahren wird.

Wie in Fig. 4d gezeigt, ist keine der beiden ober- und unterseitigen Kanten 15a, 15b der eigentlichen Schnittflanke 10 durchgängig, sondern durch die Aussparung 11 bzw. den Vorsprung 12 unterbrochen.

Im Unterschied zu Fig. 4b schneidet in **Fig. 5a** der schräg gestellte Laserbearbeitungskopf 1 während seiner Verfahrbewegung in X-Richtung mit seiner Strahlachse 6 die auf der Werkstückunterseite 13b vorgesehene Kante 15b der eigentlichen Schnittflanke 10. Beim Verfahren des Laserbearbeitungskopfes 1 in Schnittrichtung wandert die Strahlachse 6 auf dieser Kante 15b entlang der Konturlinie 14b, während der Laserstrahl 3 auf der Werkstückoberseite 13a die gewünschte Aussparungs- bzw. Vorsprungskontur 14a abfährt.

Wie in **Fig. 5b** gezeigt, mündet die lasergeschnittene Aussparung 11 oder der lasergeschnittene Vorsprung 12 auf der Werkstückunterseite 13b in die Kante 15b der eigentlichen Schnittflanke 10, so dass diese unterseitige Kante 15b der eigentlichen Schnittflanke 10 durchgängig, also durch die Aussparung 11 bzw. den Vorsprung 12 nicht unterbrochen ist. Das Verfahren gemäß den Figuren 5a und 5b fällt ebenfalls nicht unter den Umfang der vorliegenden Ansprüche.

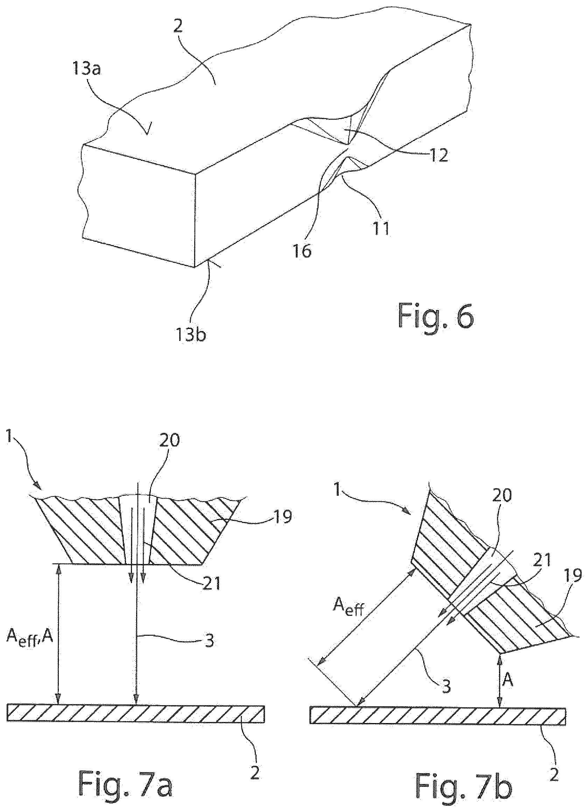

In **Fig. 6** ist eine weitere Verfahrensvariante gezeigt (die ebenfalls nicht unter den Umfang der vorliegenden Ansprüche fällt), bei der der Fixpunkt 16, um den der Laserschneidkopf 1 während des Schneidens der lokalen Schnittkantenmodifikation gedreht wird, etwa in der Werkstückmitte positioniert ist. Auf diese Weise wird auf der Werkstückoberseite 13a ein kegelförmiger Vorsprung 12 und auf der Werkstückunterseite 13b eine kegelförmige Aussparung 11 erzeugt. Solche Kantenmodifikationen sind von Vorteil für die Kompensation der Materialdehnung oder -stauchung bei einem anschließenden Biegeprozess: Beim Biegen wird das Werkstück 2 auf der Werkstückoberseite (Außenseite) 13a gedehnt und auf der Werkstückunterseite (Innenseite) 13b gestaucht. Die dabei auftretende Materialverdrängung wird durch die zuvor eingebrachte Kantenmodifikation zumindest teilweise kompensiert.

In **Fign. 7a, 7b** ist eine Schneidgasdüse **19** des Laserbearbeitungskopfes 1 gezeigt, aus deren Düsenöffnung **20** der Laserstrahl 3 zusammen mit einem Schneidgas **21** in Richtung auf das Werkstück 2 austritt. Fig. 7a zeigt die Schneidgasdüse 19 bei nicht schräggestelltem Laserbearbeitungskopf 1 und Fig. 7b die Schneidgasdüse 19 bei schräggestelltem Laserbearbeitungskopf 1. Wie in Fig. 7b gezeigt, wird der Abstand **A** zwischen Schneidgasdüse 19 und Werkstück 2 bei der Schrägstellung des Laserbearbeitungskopfs 1 reduziert, da ansonsten der effektive Abstand **A_{eff}**, der von dem aus der Schneidgasdüse 19 ausgetretenen Laserstrahl 3 bis zum Werkstück 2 zurückgelegt wird, ansteigen würde. Idealerweise soll entlang der gesamten Verfahrstrecke der effektive Abstand A_{eff} konstant bleiben. Die Fokuslage des Laserstrahls 3 auf dem Werkstück 2 kann entsprechend der Änderung des Abstands A und der effektiven Blechdicke nachgeführt werden, so dass die Lage des Fokuspunkts relativ zur Werkstückoberfläche 4 unverändert bleibt. In der Praxis ist häufig keine Anpassung der Fokuslage erforderlich.

Vorzugsweise wird beim Schneiden der schrägen Aussparung 11 oder des schrägen Vorsprungs 12 der Druck des aus einer Schneidgasdüse 19 austretenden Schneidgases erhöht, um der größeren effektiven Werkstückdicke Rechnung zu tragen.

Bevorzugt wird beim Laserschneiden der Aussparung 11 oder des Vorsprungs 12 die Schnittgeschwindigkeit reduziert, und zwar um das Maß, um welches die effektive Blechdicke steigt. So steigt z.B. beim Laserschneiden eines 12 mm dicken Werkstücks 2 mit einem (temporären) Anstellwinkel von 37° die effektive Werkstückdicke auf 15 mm an. Der Vorschub wird daher auf den Wert reduziert, der typischerweise für das Laserschneiden eines 15 mm dicken Werkstücks verwendet wird. Allerdings sollte der Vorschub nicht zu stark reduziert werden (typischerweise nicht auf < 60%), da sonst im Bereich der zu hohen Streckenenergie (d. h. auf der kürzeren Wegstrecke) die Schnittqualität sinkt.

Die Laserleistung bleibt nach Möglichkeit während des Laserschneidens der Aussparung 11 oder des Vorsprungs 12 gleich. Wenn die zum Laserschneiden verwendete Laserleistung jedoch unter der Nennleistung für die effektive Werkstückdicke liegt, so ist es vorteilhaft, entsprechend der ansteigenden effektiven Blechdicke auch die Laserleistung zu erhöhen.

Alle oben beschriebenen Parameter werden in Abhängigkeit vom Neigungswinkel des Laserbearbeitungskopfs 1 angepasst. Also bedeutet eine lokale Bahnänderung an der Ober-/Unterseite des Werkstücks auch eine lokale Änderung dieser Parameter. Bei geringen Winkeländerungen ist nicht unbedingt eine Anpassung der Parameter erforderlich, bzw. mit Qualitätseinbußen können einzelne Parameter unverändert bleiben.

Statt wie in den Figuren gezeigt mit einem rechtwinklig auftreffenden Laserstrahl 3 kann die Schnittflanke 10 auch mit einem schräggestellten Laserstrahls 3 geschnitten werden, dessen Schrägstellung dann zum Laserschneiden der Aussparung 11 oder des Vorsprungs 12 geändert wird, um an der schrägen Schnittflanke 10 eine schräge Aussparung 11 oder einen schrägen Vorsprung 12 zu erzeugen. Wird die Schrägstellung des Laserbearbeitungskopfs 1 während des Schneidens der Aussparung 11 oder des Vorsprungs 12 verringert, so kann die Schneidgeschwindigkeit beim Schneiden der Aussparung 11 oder des Vorsprungs 12 auch höher sein als beim Schneiden der Schnittflanke 10.

Mit dem Verfahren können verschiedene Funktionselemente hergestellt werden:
- Lokale Vorsprünge zur Einstellung einer definierten Fügespaltgeometrie: Lokale schräge Vorsprünge an der Schnittflanke stellen beim anschließenden Verschweißen solcher Flanken einen definierten Abstand zum Fügepartner sicher (für V-Nähte), ohne das Volumen der Schweißfuge maßgeblich zu reduzieren. Dies ist vorteilhaft gegenüber lokalen senkrechten Vorsprüngen, die mit gleich langen Bahnkurven an Werkstückober- und -unterseite erzeugt wurden, da bei solchen Vorsprüngen das Schweißnahtvolumen reduziert wird.
- Klemmung bei Verbindungen: Insbesondere bei dicken Blechen können mit lokalen schrägen Vorsprüngen an der Schneidkante kraftschlüssige Verbindungen, die nicht über die gesamte Blechdicke wirken, hergestellt werden. Dies erlaubt einen Fügevorgang mit Toleranzen bzw. mit geringem Kraftaufwand.
- Horizontale Ausrichtung von Fügepartnern: Gegenüberliegende Schrägschnitte (männlich / weiblich) verhindern ein Absacken der Bauteile.
- Verkippung beim Schneiden vermeiden: Durch einen schrägen Vorsprung mit größerer Ausdehnung auf der Blechoberseite kann das Absinken eines geschnittenen Bauteils in das Restgitter vermieden werden.
- Freischnitte / Konturkorrektur beim Biegen: Beim Biegen auftretende Biegewülste können durch eine entsprechende, vor dem Biegen eingebrachte, schräge Aussparungen und Vorsprünge vermieden werden.

## Patentansprüche

1. Verfahren zum Erzeugen einer Aussparung (11) oder eines Vorsprungs (12) an einer Schnittflanke (10) eines plattenförmigen Werkstücks (2), insbesondere eines Blechs,
**gekennzeichnet durch** die folgende Schritte:
Schneiden der Schnittflanke (10) mittels eines Laserstrahls (3), welcher aus einem Laserbearbeitungskopf (1) austritt, der zum Schneiden der Schnittflanke (10) in mindestens einer Richtung (X, Y) über dem Werkstück (2) verfahrbar ist und dessen Längsachse (5) gegenüber der Oberflächennormalen (7) des Werkstücks (2) schräg stellbar ist,
wobei beim Schneiden der Aussparung (11) oder des Vorsprungs (12) der Laserbearbeitungskopf (1) derart schräg gestellt und verfahren wird, dass der Laserstrahl (3) auf den beiden, laserzugewandten und laserabgewandten Werkstückseiten (13a, 13b) unterschiedlich lange Konturen (14a, 14b) abfährt, um dadurch gegenüber der eigentlichen Schnittflanke (10) eine schräge Aussparung (11) oder einen schrägen Vorsprung (12) zu erzeugen, wobei während des Schneidens der schrägen Aussparung (11) oder des schrägen Vorsprungs (12) der Laserbearbeitungskopf (1) derart schräg gestellt und verfahren wird, dass der Laserstrahl (3) auf der einen, ersten Werkstückseite (13a) eine Aussparungs- bzw. Vorsprungskontur (14a) abfährt und dabei mit seiner Strahlachse (6) stets die auf der anderen, zweiten Werkstückseite (13b) vorgesehene Kante (15b) der eigentlichen Schnittflanke (10) schneidet, so dass die schräge Aussparung (11) oder der schräge Vorsprung (12) auf der zweiten Werkstückseite (13b) in die Kante (15b) der eigentlichen Schnittflanke (10) mündet, und wobei während des Schneidens der schrägen Aussparung (11) oder des schrägen Vorsprungs (12) die die Kante (15b) der eigentlichen Schnittflanke (10) schneidende Strahlachse (6) des Laserstrahls (3) in einem Fixpunkt (16) auf dieser Kante (15b) bleibt.

2. Verfahren nach Anspruch 1, **dadurch gekennzeichnet, dass** während des Schneidens der schrägen Aussparung (11) oder des schrägen Vorsprungs (12) die Schrägstellung des Laserbearbeitungskopfes (1), insbesondere in einer Ebene rechtwinklig zur Schnittflanke (10), geändert wird.

3. Verfahren nach Anspruch 1 oder 2, **dadurch gekennzeichnet, dass** entlang der gesamten, vom Laserstrahl (3) auf der ersten Werkstückseite (13a) abgefahrenen Aussparungs- bzw. Vorsprungskontur (14a) der Laserbearbeitungskopf (1) mit konstanter Geschwindigkeit um den Fixpunkt (16) geschwenkt wird.

4. Verfahren nach einem der vorhergehenden Ansprüche, **dadurch gekennzeichnet, dass** die Schneidgeschwindigkeit (v2) beim Schneiden der schrägen Aussparung (11) oder des schrägen Vorsprungs (12) gegenüber der Schneidgeschwindigkeit (v1) beim Schneiden der Schnittflanke (10) reduziert oder erhöht wird.

5. Verfahren nach einem der vorhergehenden Ansprüche, **dadurch gekennzeichnet, dass** beim Schneiden der schrägen Aussparung (11) oder des schrägen Vorsprungs (12) die Laserleistung den gleichen Wert hat wie beim Schneiden der Schnittflanke (10).

6. Verfahren nach einem der vorhergehenden Ansprüche, **dadurch gekennzeichnet, dass** beim Schneiden der schrägen Aussparung (11) oder des schrägen Vorsprungs (12) der Abstand zwischen dem Laserbearbeitungskopf (1) und der Werkstückoberfläche (4), insbesondere der Abstand (A) zwischen einer Schneidgasdüse (19) des Laserbearbeitungskopfes (1) und der Werkstückoberfläche (4), mit zunehmender Schrägstellung des Laserbearbeitungskopfes (1) reduziert wird.

7. Verfahren nach einem der vorhergehenden Ansprüche, **dadurch gekennzeichnet, dass** beim Schneiden der schrägen Aussparung (11) oder des schrägen Vorsprungs (12) der Druck eines aus einer Schneidgasdüse (19) des Laserbearbeitungskopfs (1) austretenden Schneidgases (21) mit zunehmender Schrägstellung des Laserbearbeitungskopfes (1) erhöht wird.

## Claims

1. A method for producing a recess (11) or a projection (12) on a cut edge (10) of a plate-shaped workpiece (2), in particular a metal sheet, **characterized by** the following steps:
cutting the cut edge (10) by means of a laser beam (3) which emerges from a laser processing head (1) that can be moved above the workpiece (2) in at least one direction (X, Y) in order to cut the cut edge (10) and whose longitudinal axis (5) can be set at an angle to the surface normal (7) of the workpiece (2),
wherein, when cutting the recess (11) or the projection (12), the laser processing head (1) is positioned and moved at an angle such that the laser beam (3) moves along contours (14a, 14b) of different lengths on the two workpiece sides (13a, 13b) facing the laser and facing away from the laser, so that, as a result, an inclined recess (11) or an inclined projection (12) is produced relative to the actual cut edge (10), wherein, during the cutting of the inclined recess (11) or of the inclined projection (12), the laser processing head (1) is positioned and moved at an angle such that the laser beam (3) moves along a recess or projection contour (14a) on the one, first workpiece side (13a) and, in doing so, always cuts the actual cut edge (10) with its beam axis (6) on the edge (15b) provided on the other, second workpiece side (13b), so that the inclined recess (11) or the inclined projection (12) on the second workpiece side (13b) ends in the edge (15b) of the actual cut edge (10), and wherein, during the cutting of the inclined recess (11) or the inclined projection (12), the beam axis (6) of the laser beam (3) that cuts the edge (15b) of the actual cut edge (10) remains in a fixed point (16) on this edge (15b).

2. The method according to claim 1, **characterized in that** during the cutting of the inclined recess (11) or the inclined projection (12), the inclined position of the laser processing head (1), in particular in a plane perpendicular to the cut edge (10), is changed.

3. The method according to claim 1 or 2, **characterized in that** the laser processing head (1) is pivoted at a constant speed about the fixed point (16) along the entire recess or projection contour (14a) traversed by the laser beam (3) on the first workpiece side (13a).

4. The method according to one of the preceding claims, **characterized in that** the cutting speed (v2) when cutting the inclined recess (11) or the inclined projection (12) is reduced or increased relative to the cutting speed (v1) when cutting the cut edge (10).

5. The method according to one of the preceding claims, **characterized in that**, when cutting the inclined recess (11) or the inclined projection (12), the laser power has the same value as when cutting the cut edge (10).

6. The method according to one of the preceding claims, **characterized in that**, when cutting the inclined recess (11) or the inclined projection (12), the distance between the laser processing head (1) and the workpiece surface (4), in particular the distance (A) between a cutting gas nozzle (19) of the laser processing head (1) and the workpiece surface (4), is reduced with an increasing inclined position of the laser processing head (1).

7. The method according to one of the preceding claims, **characterized in that**, when cutting the inclined recess (11) or the inclined projection (12), the pressure of a cutting gas (21) emerging from a cutting gas nozzle (19) of the laser processing head (1) is increased with an increasing inclined position of the laser processing head (1).

## Revendications

1. Procédé pour réaliser un évidement (11) ou une saillie (12) sur un bord de coupe (10) d'une pièce (2) en forme de plaque, en particulier de tôle,
**caractérisé par** les étapes suivantes :
découpe du bord de coupe (10) à l'aide d'un faisceau laser (3) sortant d'une tête de traitement laser (1), laquelle, pour découper le bord de coupe (10), est déplaçable au-dessus de la pièce (2) selon au moins une direction (X, Y), et dont l'axe longitudinal (5) peut être orienté de manière inclinée par rapport à la normale à la surface (7) de la pièce (2),
dans lequel, lors de la découpe de l'évidement (11) ou de la saillie (12), la tête de traitement laser (1) est orientée de manière inclinée et déplacée de telle manière que le faisceau laser (3) parcourt des contours (14a, 14b) de longueurs différentes sur les deux faces (13a, 13b) de la pièce orientées vers le laser et à l'opposé du laser, de façon à réaliser, par rapport au bord de coupe (10) principal, un évidement (11) incliné ou une saillie (12) inclinée, dans lequel, pendant la découpe de l'évidement (11) incliné ou de la saillie (12) inclinée, la tête de traitement laser (1) est orientée de manière inclinée et déplacée de telle manière que le faisceau laser (3) parcourt sur la première face (13a) de la pièce un contour (14a) d'évidement ou le cas échéant de saillie, et ce faisant, découpe en continu, avec son axe de faisceau (6), l'arête (15b) prévue du bord de coupe (10) principal sur l'autre face, dite deuxième face (13b) de la pièce, de sorte que l'évidement (11) incliné ou la saillie (12) inclinée débouche sur la deuxième face (13b) de la pièce, dans l'arête (15b) du bord de coupe (10) principal, et dans lequel, pendant la découpe de l'évidement (11) incliné ou de la saillie (12) inclinée, l'axe de faisceau (6) du faisceau laser (3) découpant l'arête (15b) du bord de coupe (10) principal reste en un point fixe (16) sur cette arête (15b).

2. Procédé selon la revendication 1, **caractérisé en ce que**, pendant la découpe de l'évidement (11) incliné ou de la saillie (12) inclinée, l'inclinaison de la tête de traitement laser (1), en particulier dans un plan perpendiculaire au bord de coupe (10), est modifiée.

3. Procédé selon la revendication 1 ou 2, **caractérisé en ce que**, le long de l'intégralité du contour (14a) d'évidement ou le cas échéant de saillie parcouru par le faisceau laser (3) sur la première face (13a) de la pièce, la tête de traitement laser (1) est pivotée à vitesse constante autour du point fixe (16).

4. Procédé selon l'une des revendications précédentes, **caractérisé en ce que** la vitesse de découpe (v2) lors de la découpe de l'évidement (11) incliné ou de la saillie (12) inclinée est réduite ou augmentée par rapport à la vitesse de découpe (v1) lors de la découpe du bord de coupe (10).

5. Procédé selon l'une des revendications précédentes, **caractérisé en ce que**, lors de la découpe de l'évidement (11) incliné ou de la saillie (12) inclinée, la puissance laser a la même valeur que lors de la découpe du bord de coupe (10).

6. Procédé selon l'une des revendications précédentes, **caractérisé en ce que**, lors de la découpe de l'évidement (11) incliné ou de la saillie (12) inclinée, la distance entre la tête de traitement laser (1) et la surface de la pièce (4), en particulier la distance (A) entre une buse de gaz de découpe (19) de la tête de traitement laser (1) et la surface de la pièce (4), est réduite à mesure que l'inclinaison de la tête de traitement laser (1) augmente.

7. Procédé selon l'une des revendications précédentes, **caractérisé en ce que**, lors de la découpe de l'évidement (11) incliné ou de la saillie (12) inclinée, la pression d'un gaz de découpe (21) sortant d'une buse de gaz de découpe (19) de la tête de traitement laser (1) est augmentée à mesure que l'inclinaison de la tête de traitement laser (1) augmente.
